(19) Europäisches Patentamt
European Patent Office
Office européen des brevets

(11) Veröffentlichungsnummer: **0 337 951**
**A2**

(12) # EUROPÄISCHE PATENTANMELDUNG

(21) Anmeldenummer: **89810266.0**

(22) Anmeldetag: **06.04.89**

(51) Int. Cl.[4]: **C 08 F 246/00**
C 08 F 2/44, C 09 D 3/74,
C 08 G 63/68

(30) Priorität: **15.04.88 CH 1403/88**

(43) Veröffentlichungstag der Anmeldung:
**18.10.89 Patentblatt 89/42**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Bäbler, Fridolin, Dr.**
**Route du Couchant 12**
**CH-1723 Marly (CH)**

**Siongo, Mario, Dr.**
**Sägetrainweg 553**
**CH-1712 Tafers (CH)**

(54) **Farbige Polymermikropartikel.**

(57) Farbige Polymermikropartikel mit einer Teilchengrösse zwischen 0,01 und 0,5 µm, erhältlich durch Copolymerisation in an sich bekannter Weise von einer oder mehreren verschiedenen ein- oder mehrfach ethylenisch ungesättigten Verbindungen und/oder einer oder mehreren Glycidylverbindungen und/oder einem oder mehreren verschiedenen Monomeren, ausgewählt aus der Gruppe der Polyalkohole, Polycarbonsäuren, Hydroxycarbonsäuren, Lactone und Aminocarbonsäuren, dadurch gekennzeichnet, dass zusätzlich mindestens ein eine zur Polymerisation befähigte reaktive Gruppe enthaltendes Farbstoff-oder Pigmentderivat einpolymerisiert wird.

Diese Polymermikropartikel eignen sich hervorragend zur Färbung von hochmolekularem organischem Material. Man erhält damit Ausfärbungen höchster Transparenz mit ausgezeichneter Migrationsbeständigkeit und sehr guten Allgemeinbeständigkeiten.

EP 0 337 951 A2

**Beschreibung**

## Farbige Polymermikropartikel

Die vorliegende Erfindung betrifft farbige Polymermikropartikel und ihre Verwendung zur Erhaltung von hochtransparenten Ausfärbungen in hochmolekularem organischem Material.

Pigmente sind definitionsgemäss feste, in den Medien, in denen sie angewandt werden unlösliche, dafür aber migrationsbeständige Farbmittel. Mit diesen Eigenschaften sind aber auch, je nach Verwendungszweck, in verschiedenem Masse ins Gewicht fallende Nachteile verbunden. Im allgemeinen ergeben Pigmente deckende bzw. opake Ausfärbungen. Es können zwar auch transparente Pigmente hergestellt werden, die, ihrer ausserordentlich feinen Form wegen, ein schlechtes rheologisches Verhalten aufweisen. Sie müssen deshalb, z.B. für den Einsatz in Lacken, besonderen, aufwendigen Konditionierverfahren unterworfen werden. Aber auch durch diese sogenannten transparenten Pigmente wird, im Gegensatz zu den löslichen Farbstoffen, immer ein wenn auch geringer Anteil des einfallenden Lichtes gestreut. Dies führt zwangsläufig zu einer gewissen Opazität, die für spezielle Verwendungszwecke, wie z.B. bei Metalleffektlackierungen und bei transparenten, fluoreszierenden Kunststoffformteilen, äusserst unerwünscht ist. Die rheologisch unbedenklichen löslichen Farbstoffe würden wohl zu einer farbstarken, brillanten und hochtransparenten Ausfärbung führen; sie können aber, wegen ihrer mangelnden Migrationsbeständigkeit, für die Massenfärbung von hochmolekularem organischem Material nicht verwendet werden.

In der Beschichtungstechnik wurde in den letzten Jahren, bedingt durch das Erfordernis einer möglichst geringen Umweltbelastung, eifrig nach einem Mittel gesucht, welches es ermöglicht den Anteil des in den Beschichtungszusammensetzungen anwesenden filmbildenden Materials zu erhöhen und den Anteil an inerten flüssigen Lösungs- und Verdünnungsmitteln, die während der Lackherstellung und der Trocknung und Härtung abgedampft werden müssen, zu reduzieren. Dank den in neuerer Zeit entwickelten Polymermikropartikeln gelang es, dieses Problem vorteilhaft zu lösen. Der Ausdruck Polymermikropartikel ist mittlerweile in der Lacktechnik und damit in der einschlägigen Literatur wohlbekannt. In der Literatur ist an Stelle des Ausdrucks "Mikropartikel" auch der Ausdruck "Mikrogel" gebräuchlich. Herstellung und Anwendungsmöglichkeiten solcher Polymermikropartikel sind bereits aus zahlreichen Publikationen bekannt. Beschichtungszusammensetzungen mit einem hohen Anteil an filmbildendem Material sind z.B. aus der US-PS 4 232 135 und der US-PS 4 546 046, sowie der jeweils darin zitierten Literatur bekannt; sie sind im allgemeinen aus einer flüssigen kontinuierlichen Phase und einer dispersen Phase, die einen gegebenenfalls hohen Anteil an unlöslichen Polymermikroteilchen enthält, aufgebaut. Aus der US-PS 4 695 607 sind sternförmig polymerisierte Polymermikropartikel, insbesondere "lebende" Mikropartikel, bekannt, die ebenfalls für die vorstehend angegebenen Zwecke verwendet werden können. Die EP-A 226 538 beschreibt lichtstabilisierte Polymermikropartikel. Dabei handelt es sich um Polymermikropartikel, die mindestens ein Lichtschutzmittel enthalten, welches gegebenenfalls in den Polymermikropartikeln einpolymerisiert ist.

In der US-PS 4 232 135 wird u.a. auch die Möglichkeit offenbart, in Beschichtungszusammensetzungen Polymermikropartikel mit Pigmentpartikeln zu kombinieren. Dabei werden Pigmentpartikel mit den Polymermikropartikeln vermischt oder in den Mikropartikeln eingekapselt. Als Beispiel für eine solche Applikation wird einzig das deckende Titandioxyd aufgeführt.

Es wurde nun gefunden, dass durch Einpolymerisieren von mit zur Polymerisation befähigten reaktiven Gruppen ausgestatteten Pigmenten oder Farbstoffen in Polymermikropartikel der oben erwähnten Art, rheologisch unbedenkliche farbige Polymermikropartikel erhalten werden, die, in hochmolekulares organisches Material eingearbeitet, ganz überraschend hochtransparente, farbstarke, brillante und migrationsbeständige Ausfärbungen mit ausgezeichneten Licht- und Wetterbeständigkeiten ergeben.

Die vorliegende Erfindung betrifft demnach farbige Polymermikropartikel mit einer Teilchengrösse zwischen 0,01 und 0,5 µm, erhältlich durch Copolymerisation in an sich bekannter Weise von einer oder mehreren verschiedenen ein- oder mehrfach ethylenisch ungesättigten Verbindungen und/oder einer oder mehreren Glycidylverbindungen und/oder einem oder mehreren verschiedenen Monomeren, ausgewählt aus der Gruppe der Polyalkohole, Polycarbonsäuren, Hydroxycarbonsäuren, Lactone und Aminocarbonsäuren, dadurch gekennzeichnet, dass zusätzlich mindestens ein Farbstoff-oder Pigmentderivat der Formel

$P{-}(X)_m$ (I)

einpolymerisiert wird, worin P den Rest eines organischen Pigments oder Farbstoffs bedeutet, m eine Zahl von 1 bis 4 bedeutet und X eine zur Polymerisation befähigte reaktive Gruppe der Formel

$-OH$, $-NH_2$,

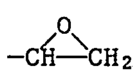,

$-CNO$, $-CH{=}CH_2$, $-C(CH_3){=}CH_2$, $-COCH{=}CH_2$, $-COC(CH_3){=}CH_2$,

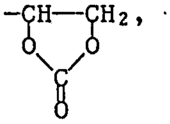

-CONHR oder -COOR, darstellt, worin R Wasserstoff, $C_1$-$C_4$-Alkyl, eine Glycidylgruppe oder eine Gruppe $-CH_2-CH=CH_2$, $-CH_2-C(CH_3)=CH_2$, $-(CH_2)_n-OCO-CH=CH_2$, $-(CH_2)_n-OCO-C(CH_3)=CH_2$, $-(CH_2)_n-OH$, $-(CH_2)_n-CHOH-CH_2OCO-C(CH_3)=CH_2$,

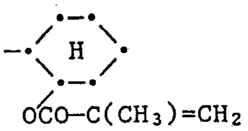 oder 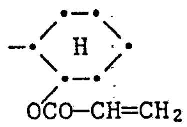

ist, wobei jede reaktive Gruppe entweder direkt oder über eine zweiwertige Gruppe $-(CH_2)_n-$, $-(CH_2)_n-O-$, $-(CH_2)_n-O-CH_2-$, $-(CH_2)_n-CHOH-$,

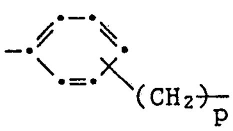 ,

$-(CH_2)_n-CHOH-CH_2O-$, $-SO_2-NH-(CH_2)_n-$,

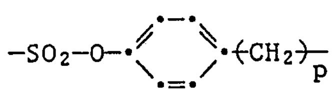

oder $-NHCO-(CH_2)_p-$,

worin n eine Zahl von 1 bis 18 und p eine Zahl von Null bis 18 bedeuten, an einen aromatischen Ring oder ein Stickstoffatom des Pigment- oder Farbstoffmoleküls gebunden ist.

R als $C_1$-$C_4$-Alkyl bedeutet z.B. Methyl, Ethyl, n-Propyl, Isopropyl, n-Butyl, sec.-Butyl oder tert.-Butyl.

Unter Mikropartikeln im Sinne der vorliegenden Erfindung sind solche zu verstehen, die im wesentlichen mit einer bestimmten Grösse in den genannten kolloidalen Dimensionen vorliegen. Ein wesentliches Merkmal der Mikropartikel neben ihrer Grösse ist, dass sie einen vernetzten Kern enthalten bzw. aus diesem bestehen. Die Mikropartikel weisen in der Idealform eine annähernd kugelförmige Gestalt auf.

Das Polymer, aus dem die Mikroteilchen bestehen, kann entweder ein Additionspolymer, insbesondere ein Homo- oder Copolymer aus einer oder mehreren ethylenisch ungesättigten Monomer-Komponenten, einer oder mehreren Glycidylverbindungen, ein Polyurethan oder ein Kondensationspolymer, beispielsweise ein Polyester oder ein Polyamid, oder eine Kombination aus beiden Polymerarten, sein. Es kann sich aber auch um ein durch Gruppentransferpolymerisation, wie sie z.B. in der US-PS 4 695 607 beschrieben ist, erhaltenes Polymer handeln.

Die Mikropartikel können gegebenenfalls mit einem Weichmacher weichgemacht sein.

Handelt es sich bei den Mikropartikeln um ein Additionspolymer, so kommen als geeignete Monomeren z.B. Ethen, Propen, Buten, Isopren, Butadien, Isocyanate, Epoxide, Acrylsäure und Methacrylsäure, deren Ester, wie z.B. Methylmethacrylat, Butylmethacrylat, Ethylacrylat, Butylacrylat und 2-Ethylhexylacrylat, ferner Glycidylester, Vinylether, Vinylester, wie z.B. Vinylacetat, die Vinylester von "Versatic Acid"®, Vinylhalogenide wie beispielsweise Vinylchlorid, Vinylidenchlorid, Vinylaromaten, wie Styrol, Vinyltoluol und tert.-Butylstyrol, oder $\alpha,\beta$-ungesättigte Nitrile, wie Acrylnitril oder Methacrylnitril, in Frage. Bevorzugt sind Polymere aus Acryl- und Methacrylsäureestern und deren Copolymere.

Vernetzte Additionspolymermikropartikel erhält man z.B., indem man dem Monomerengemisch eine gewisse Menge an Monomeren zusetzt, welche zusätzlich zu den ungesättigten, polymerisierbaren Gruppierungen komplementär reaktive Gruppen enthalten, z.B. Glycidylmethacrylat oder Methacrylsäure. Geeignete komplementär reaktive Gruppen werden in der GB-PS 1,156,012 beschrieben, wo sich auch Hinweise über die zu verwendenden Monomeren und ein Verfahren zur Herstellung von vernetzten Additionspolymermikroteilchen finden. Die nach der GB-PS 1,156,012 hergestellten Mikropartikel enthalten Gruppen, die bei der Herstellung nicht co-reagiert haben, jedoch z.B. durch nachträgliches Erhitzen zu einer Coreaktion veranlasst werden können und dabei Vernetzungen bilden.

Eine andere Möglichkeit, vernetzte Additionspolymermikropartikel zu erhalten, besteht darin, den der Polymerisation unterliegenden Monomeren einen kleinen Anteil von Monomeren einzuverleiben, die in Bezug auf die Polymerisationsreaktion bifunktionell sind, wie z.B. Ethylenglycoldimethacrylat oder Divinylbenzol. Weitere Beispiele für geeignete bifunktionelle Monomeren werden z.B. in der US-PS 4,290,932 genannt.

Die zur Herstellung der erfindungsgemässen farbigen Polymermikropartikel sehr gut geeigneten sternförmigen Mikropartikel, wie beispielsweise die sogenannten "lebenden" Mikropartikel, sowie ihre

Herstellung, sind in der US-PS 4 695 607 beschrieben.

Es ist ein bevorzugtes Merkmal der erfindungsgemässen Polymermikroteilchen, dass sie als Bestandteil von Beschichtungszusammensetzungen mittels zur Kondensationspolymerisation befähigter reaktiver Gruppen an deren Härtung teilnehmen können. Im Fall der Additionspolymermikropartikel wird dies beispielsweise mit ethylenisch ungesättigten Monomeren erreicht, die z.B. Hydroxy- oder Carboxylgruppen enthalten. Beispiele sind Hydroxyalkylacrylate oder -methacrylate, wie Hydroxyethylacrylat und Hydroxyisopropylmethacrylat, oder ungesättigte Carbonsäuren, wie Acrylsäure oder Methacrylsäure. Handelt es sich um vernetzbare Polymermikroteilchen, und enthält das entsprechende Monomeren-Gemisch neben den Monomeren mit den zur Lackhärtung befähigten reaktiven Gruppen noch andere Monomere mit komplementär reaktiven Gruppen, z.B. Glycidylgruppen, so setzt man die ersteren im Ueberschuss ein.

Alternativ können die Mikropartikel gleichzeitig selbstvernetzbar und vernetzbar mit anderen Bestandteilen von Lackzusammensetzungen gemacht werden, indem man dem Monomerengemisch Monomere, wie z.B. N-Butoxymethyl(meth)acrylamid, zugibt.

Geeignete monomere Ausgangsmaterialien für die Herstellung von Kondensationspolymermikroteilchen sind solche, die für die Herstellung solcher Polymere durch Schmelz- oder Lösungspolymerisationstechniken allgemein bekannt sind. Beispiele für geeignete Materialien im Falle von Polyestermikroteilchen sind mehrwertige Alkohole, wie z.B. Ethylenglycol, Propylenglycol, Butylenglycol, 1,6-Hexylenglycol, Neopentylglycol, Diethylenglycol, Triethylenglycol, Tetraethylenglycol, Glycerin, Trimethylolpropan, Trimethylolethan, Pentaerythrit, Dipentaerythrit, Tripentaerythrit, Hexantriol, Oligomere von Styrol und Allylalkohol (wie z.B. das unter der Bezeichnung RJ 100 von der Monsanto Chemical Co. vertriebene Material), und die Kondensationsprodukte von Trimethylolpropan mit Ethylenoxid oder Propylenoxid (wie z.B. die im Handel als "Niax"-Triole bekannten Produkte) gemeinsam mit Polycarbonsäuren, wie z.B. Bernsteinsäure, oder deren Anhydrid, Adipinsäure, Azelainsäure, Sebacinsäure, Maleinsäure oder deren Anhydrid, Fumarsäure, Muconsäure, Itaconsäure, Phthalsäure oder deren Anhydrid, Isophthalsäure, Terephthalsäure, Trimellitsäureanhydrid, Pyromellitsäure oder deren Anhydrid, Truxinsäure und Truxilsäure. Im Falle von Polyamidteilchen sind geeignete monomere Ausgangsmaterialien Aminocarbonsäuren, wie z.B. 6-Aminocapronsäure oder 11-Aminoundecansäure, oder die entsprechenden Lactame, und/oder Polyamine, wie z.B. Ethylendiamin, Propylendiamin, Hexamethylendiamin, Diethylentriamin, Triethylentetramin oder Tris-(aminomethyl)-methan, gemeinsam mit den oben erwähnten Polycarbonsäuren.

Die Vernetzung der Kondensationspolymermikroteilchen wird, wie schon für die Additionspolymermikroteilchen beschrieben, z.B. dadurch erreicht, dass man dem zu polymerisierenden Gemisch einen Anteil eines oder mehrerer Ausgangsmonomeren zusetzt, die eine grössere Funktionalität als 2 aufweisen. Es ist ausserdem bevorzugt, dass die Kondensationspolymermikropartikel als Bestandteil von Beschichtungszusammensetzungen an deren Härtung teilnehmen. Stellt man die Mikropartikel unter Verwendung der oben genannten Monomeren her, so besitzen sie oftmals schon eine zu diesem Zweck ausreichende Anzahl an geeigneten reaktiven Gruppen, z.B. Hydroxy-, Amino- oder Carboxylgruppen, als Endgruppen im Polymer.

Werden zusätzliche reaktive Gruppen benötigt, so führt man in die Monomerenmischung geeignete Monomeren mit einer Funktionalität grösser als 2 ein, die unter den Bedingungen der Teilchenherstellung höchstens verzweigen, nicht jedoch vernetzen können.

Die erfindungsgemässen Polymermikropartikel können z.B. nur aus dem vernetzten Polymerkern bestehen, der dann das einpolymerisierte Pigment-oder Farbstoffderivat enthält. Häufig bilden sie aber dann keine stabilen Dispersionen aus (die Teilchen setzen sich ab), oder die Dispersion muss durch Dispergatoren zusätzlich stabilisiert werden. Ferner ist die Verteilung in der flüssigen kontinuierlichen Phase der Lackzusammensetzung, in der die Mikropartikel eingesetzt werden können, nicht ideal. Daher ist es besonders bevorzugt, die Mikropartikel so zu modifizieren, dass stabile Dispersionen in vielen Dispersionsmitteln sowie gute Verteilung in der flüssigen kontinuierlichen Phase von Lackzusammensetzungen gewährleistet sind. Eine bevorzugte Modifikation besteht darin, an den eigentlichen Mikropartikelkern im wesentlichen lineare oder wenig verzweigte Polymerketten anzubringen, z.B. durch Anpolymerisieren oder Ankondensieren (Graften). Diese linearen Polymeren enthalten funktionelle Gruppen, die ein solches Verhältnis an hydrophilen und hydrophoben Funktionen aufweisen, dass die Dispergierbarkeit des resultierenden Gesamtmikropartikels erhöht und damit eine stabile Dispersion sichergestellt wird. Die zum Aufgraften auf den Polymermikropartikelkern geeigneten linearen bzw. leicht verzweigten Polymeren werden im folgenden auch als "amphipathische" Dispersionsmittel bezeichnet. Selbstverständlich kann die Dispergierbarkeit in bestimmten Lösungsmitteln auch auf andere Weise sichergestellt werden, z.B. durch Einführen von geeigneten Kombinationen ionischer Gruppen.

Erfindungsgemässe Polymermikropartikel, die ein amphipathisches Dispersionsmittel enthalten, können das einpolymerisierte Pigment- oder Farbstoffderivat im Kern, im amphipathischen Dispersionsmittel, oder in beiden enthalten. Dabei können im Kern und im amphipathischen Disper sionsmittel jeweils verschiedene Pigment- oder Farbstoffderivate enthalten sein. Das Pigment- oder Farbstoffderivat wird in das amphipathische Dispersionsmittel auf die gleiche Weise wie in den Kern, nämlich mittels seinen zur Polymerisation befähigten reaktiven Gruppen, direkt bei der Herstellung desselben, einpolymerisiert.

Als für die Herstellung der erfindungsgemässen farbigen Polymermikropartikel geeignete einpolymerisierbare Pigment- oder Farbstoffderivate $P{-}(X)_m$ kommen Derivate praktisch aller bekannten Klassen von Pigmenten und Farbstoffen in Frage, wie z.B. solche aus der Azo-, Azomethin-, Anthrachinon-, Phthalocyanin-, Perinon-, Perylen-, Dioxazin-, Thioindigo-, Iminoisoindolinon-, Iminoisoindolin-, Chinacridon-,

Flavanthron-, Indanthron-, Anthrapyrimidin-, Chinophthalon- und Diketopyrrolopyrrolreihe, ferner Metallkomplexe von z.B. Azo-, Azomethin- oder Methinfarbstoffen, sowie Fluoreszenzfarbstoffe, wie beispielsweise solche aus der Cumarin-, Naphthalimid-, Pyrazolin-, Acridin-, Xanthen-, Thioxanthen-, Oxazin-, Thiazin- oder Benzthiazolreihe, vorausgesetzt, dass sie mit einem eine zur Polymerisation befähigte reaktive Gruppe enthaltenden organischen Rest X, gemäss vorstehender Beschreibung, versehen werden können. Von besonderem Interesse sind aber die Pigmentderivate der oben erwähnten Klassen, insbesondere solche aus der Phthalocyanin-, Diketopyrrolopyrrol-, Chinacridon-, Dioxazin-, Perinon- und bevorzugt der Perylentetracarbonsäure-N,N′-diimid- und Anthrachinonreihe.

Bei den Pigment- oder Farbstoffderivaten der Formel $P-(X)_m$ handelt es sich grundsätzlich um bekannte Verbindungen. Alle können jedenfalls in Analogie zu allgemein bekannten Methoden durch Einführung von -X entweder in einem Ausgangsprodukt vor der Herstellung oder direkt während oder nach der Herstellung des dem Rest P zugrundeliegenden Pigments oder Farbstoffs hergestellt werden.

Folgende Pigmentderivate der Formel $P-(X)_m$ werden zur Herstellung von erfindungsgemässen farbigen Polymermikropartikeln bevorzugt:

a) Perylentetracarbonsäurediimide der Formel

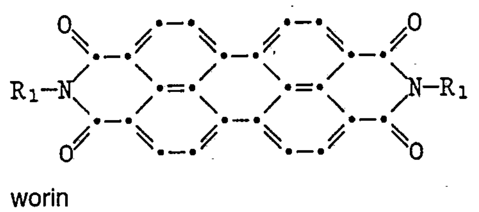

(II),

worin

$R_1$ eine Gruppe

$-(CH_2)_n-OH$, $-(CH_2)_n-COOR$, $-(CH_2)_n-O-Glycidyl$, $-(CH_2)_n-OCO-CH=CH_2$, $-(CH_2)_n-OCO-C(CH_3)=CH_2$ oder

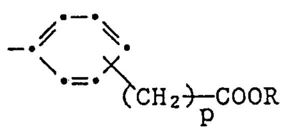

ist, worin R, n und p die oben angegebene Bedeutung haben;

b) Chinacridone der Formel

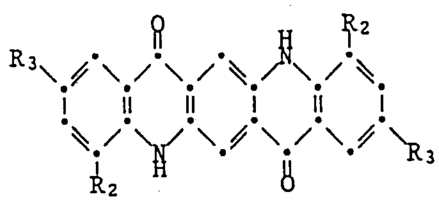

(III),

worin $R_2$ und $R_3$ unabhängig voneinander Wasserstoff, Halogen, $C_1$-$C_{18}$-Alkyl, $C_1$-$C_4$-Alkoxy, Phenyl, eine Gruppe -CONHR′, worin R′ $-(CH_2)_n-OH$ oder $-(CH_2)_n-COOR$ ist, oder eine Gruppe $-(CH_2)_n-OH$ oder $-(CH_2)-COOR$ bedeuten und R, n und p die oben angegebene Bedeutung haben, mit der Bedingung, dass mindestens eines von $R_2$ oder $R_3$ eine Gruppe -OH oder -COOR enthält;

c) Kupferphthalocyanine der Formel

$CuPc-(Y)_m$ (IV),

worin CuPC ein Kupferphthalocyaninrest ist, Y eine an einen aromatischen Ring des Kupferphthalocyanins gebundene Gruppe

$-SO_2-NH-(CH_2)_n-OR''$, $-SO_2-NH-(CH_2)_n-COOR$,

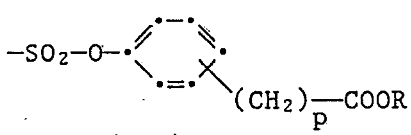

oder $-(CH_2)_p-COOR$

bedeutet, R″ Wasserstoff, $-CO-CH=CH_2$ oder $-CO-C(CH_3)=CH_2$ ist und R, m, n und p die oben angegebene Bedeutung haben;

d) Dioxazine der Formeln

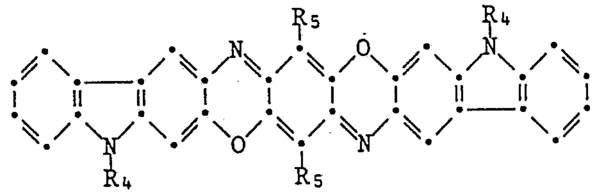

(V)

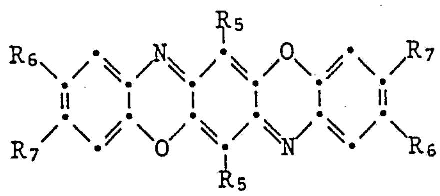

(VI),

worin $R_4$ Wasserstoff, $C_1$-$C_{18}$-Alkyl, eine Gruppe $-(CH_2)_n-$ OH oder $-(CH_2)_n-$ COOR ist, $R_5$ Wasserstoff, Halogen oder eine Gruppe -NHCOR''' bedeutet, $R_6$ Wasserstoff, eine Gruppe $-O-(CH_2)_r-$ H oder $-O-(CH_2)-OH$ und $R_7$ Wasserstoff, eine Gruppe -CONHR, -COOR oder -NHCOR''' bedeuten, R''' eine Gruppe $-CH=CH_2$, $-C(CH_3)=CH_2$ oder $-(CH_2)_r-$ OH ist, r eine Zahl von 1 bis 12 bedeutet und R, n und p die oben angegebene Bedeutung haben, mit der Bedingung, dass mindestens eines von $R_4$ und $R_5$ in Formel V und mindestens eines von $R_5$, $R_6$ und $R_7$ in Formel VI eine Gruppe -0H, -COOR oder -NHCOR''' enthält;

e) Isoindoline der Formeln

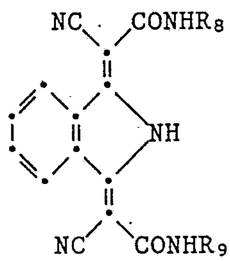

oder

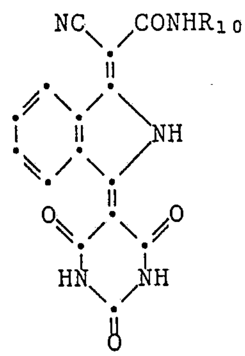

(VII) (VIII),

worin $R_8$ eine Gruppe

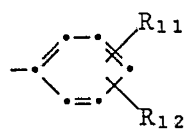

ist,

$R_9$ Wasserstoff, $C_1$-$C_{18}$-Alkyl, $C_1$-$C_{18}$-Hydroxyalkyl, Benzyl, eine Gruppe $-CH_2-CH=CH_2$, $-CH_2-C(CH_3)=CH_2$ oder

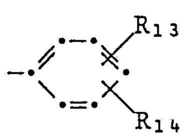

bedeutet,

$R_{10}$ die gleiche Bedeutung wie $R_8$ hat und zusätzlich noch $C_1$-$C_{18}$ Hydroxyalkyl sein kann,

$R_{11}$, $R_{12}$, $R_{13}$ und $R_{14}$ unabhängig voneinander Wasserstoff, $C_1$-$C_{18}$-Alkyl, $C_1$-$C_4$-Alkoxy, Halogen, Trifluormethyl, eine Gruppe $-CO-CH=CH_2$, $-CO-C(CH_3)=CH_2$ oder $-(CH_2)_p-$ COOR bedeuten, worin R und p die oben angegebene Bedeutung hat, mit der Bedingung, dass mindestens einer der Substituenten $R_9$, $R_{10}$, $R_{11}$, $R_{12}$, $R_{13}$ oder $R_{14}$ eine Gruppe -OH, $-CH=CH_2$, $-C(CH_3)=CH_2$ oder -COOR enthält;

f) Diketopyrrolopyrrole der Formeln

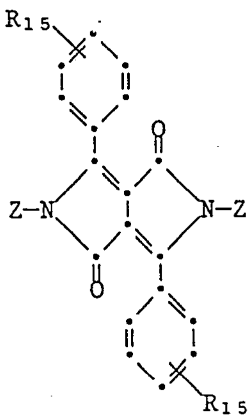

(IX)

,

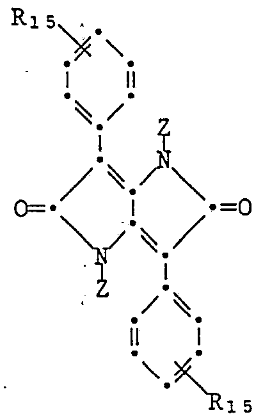

(X)

oder

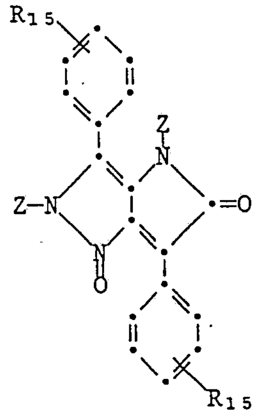

(XI),

worin $R_{15}$ Wasserstoff, Halogen, $C_1$-$C_{18}$-Alkyl, $C_1$-$C_{18}$-Alkyl-S-, $C_1$-$C_{18}$-Alkyl-O-, Cyano, Phenyl oder eine Gruppe -COOR bedeutet und Z Wasserstoff, eine Glycidylgruppe oder eine Gruppe $-CH_2-CH=CH_2$, $-CH-C(CH_3)=CH_2$, $-(CH_2)_n-OH$, $-(CH_2)_n-COOR$ oder $-CH_2-CHOH-CH_2OCO-C(CH_3)=CH_2$ ist und R und n die oben angegebene Bedeutung haben, mit der Bedingung, dass mindestens einer der Substituenten $R_{15}$ oder Z eine Glycidylgruppe oder eine Gruppe -OH, $-CH=CH_2$, $-C(CH_3)=CH_2$ oder -COOR enthält.

g) Anthrachinone der Formeln

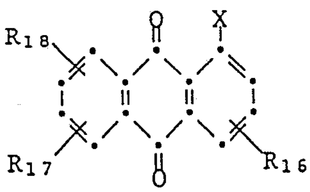

(XII)

oder

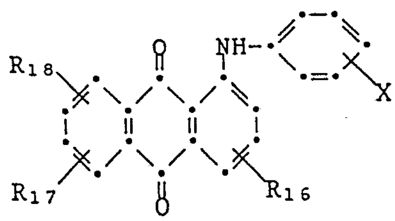

(XIII) ,

worin X, welches direkt oder über eine zweiwertige Gruppe $-(CH_2)_n-$, $-(CH_2)_n-O-$, $-(CH_2)_n-O-CH_2-$, $-(CH_2)_n-CHOH-$, $-(CH_2)_n-CHOH-CH_2O-$ oder $-NHCO-(CH_2)_p-$ an den aromatischen Ring gebunden ist, eine Gruppe der Formel

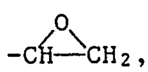

$-CH=CH_2$, $-C(CH_3)=CH_2$, $-COCH=CH_2$, -COOR oder -CONHR bedeutet, worin R, n und p die oben angegebene Bedeutung haben und $R_{16}$, $R_{17}$ und $R_{18}$ unabhängig voneinander Wasserstoff, Halogen, Hydroxy oder Amino bedeuten.

Bedeuten etwaige Substituenten Halogen, so handelt es sich z.B. um Brom, Fluor oder insbesondere um Chlor.

$C_1$-$C_{18}$-Alkylreste bedeuten jeweils z.B. Methyl, Ethyl, n-Propyl, Isopropyl, n-Butyl, sec.-Butyl, tert.-Butyl, tert-Amyl, n-Pentyl, n-Hexyl, 1,1,3,3-Tetramethylbutyl, n-Heptyl, n-Octyl, Nonyl, Decyl, Undecyl, Dodecyl, Tridecyl, Tetradecyl, Hexadecyl oder Octadecyl.

Beispiele von $C_1$-$C_{18}$-Hydroxyalkylgruppen sind Hydroxymethyl, 1-Hydroxyethyl, 2-Hydroxyethyl, 1-Methyl-2-hydroxyethyl, 1,1-Dimethyl-2-hydroxyethyl, 3-Hydroxypropyl, 4-Hydroxybutyl, 5-Hydroxypentyl, 6-Hydroxyhexyl, 8-Hydroxyoctyl, 1,1,3,3-Tetramethyl-4-hydroxybutyl, 10-Hydroxydecyl, 16-Hydroxyhexadecyl und 18-Hydroxyoctadecyl.

Folgende Pigmentderivate der Formel $P-(X)_m$ werden zur Herstellung von erfindungsgemässen farbigen Polymermikropartikeln besonders bevorzugt:

h) Perylentetracarbonsäurediimide der Formel II, worin $R_1$ eine Gruppe $-(CH_2)_n-COOR$, $-(CH_2)_n-O$-Glycidyl, $-(CH_2)_n-OCO-CH=CH_2$ oder $-(CH_2)_n-OCO-C(CH_3)=CH_2$ ist, R Wasserstoff, eine Glycidylgruppe, eine Gruppe $-CH_2-CH=CH_2$, $-CH_2-C(CH_3)=CH_2$ oder $-CH_2-CHOH-CH_2OCO-C(CH_3)=CH_2$ ist und n eine Zahl von 6 bis 11 bedeuten;

i) Chinacridone der Formel III, worin $R_2$ Wasserstoff, $R_3$ eine Gruppe -COOR und R Wasserstoff, eine Glycidylgruppe, eine Gruppe $-CH_2-CH=CH_2$, $-CH_2-C(CH_3)=CH_2$, $-(CH_2)_n-OCO-CH=CH_2$, $-(CH_2)_n-OCO-C(CH_3)=CH_2$ oder $-CH_2-CHOH-CH_2OCO-C(CH_3)=CH_2$ bedeuten, worin n die oben angegebene Bedeutung hat.

k) Kupferphthalocyanine der Formel IV, worin CuPc die oben angegebene Bedeutung hat und Y eine an einen aromatischen Ring des Kupferphthalocyanins gebundene Gruppe

$-SO_2NH\text{-}(CH_2)_n\text{-}OR''$ oder 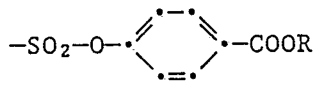

ist, worin R″ Wasserstoff, $-CO-CH=CH_2$ oder $-CO-C(CH_3)=CH_2$ ist, R Wasserstoff oder eine Gruppe $-CH_2-CH=CH_2$, $-CH_2-C(CH_3)=CH_2$ oder $-CH_2-CHOH-CH_2OCO-C(CH_3)=CH_2$ bedeutet, n die oben angegebene Bedeutung hat und m eine Zahl von 1 bis 4 ist.

l) Dioxazine der Formel VI, worin $R_5$ Wasserstoff oder Chlor und $R_6$ Wasserstoff sind, $R_7$ eine Gruppe $-COO\text{-}(CH_2)_n\text{-}OCO-CH=CH_2$, $-COO\text{-}(CH_2)_n\text{-}OCO-C(CH_3)=CH_2$, $-CONH\text{-}(CH_2)_n\text{-}OCO-CH=CH_2$, $-CONH\text{-}(CH_2)_n\text{-}OCO-C(CH_3)=CH_2$ oder $-NHCOR'''$ bedeutet, R‴ eine Gruppe $-CH=CH_2$, $-C(CH_3)=CH_2$ oder $\text{-}(CH_2)_r\text{-}OH$, r eine Zahl von 2 bis 6 und n eine Zahl von 1 bis 12 sind;

m) Isoindoline der Formeln VII und VIII, worin $R_8$ eine Gruppe

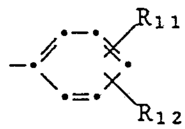 ist,

$R_9$ Wasserstoff oder eine Gruppe

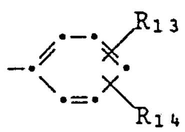 bedeutet,

$R_{10}$ die gleiche Bedeutung wie $R_8$ hat,
$R_{11}$ und $R_{13}$ unabhängig voneinander Wasserstoff oder Chlor sind und $R_{12}$ und $R_{14}$ unabhängig voneinander Wasserstoff, Chlor, eine Gruppe $-CH_2-CH=CH_2$, $-CH_2-C(CH_3)=CH_2$ oder $-COOR$ bedeuten und R eine Glycidylgruppe oder eine Gruppe $-CH_2-CH=CH_2$, $-CH_2-C(CH_3)=CH_2$, $\text{-}(CH_2)_z\text{-}OCO-C(CH_3)=CH_2$ oder $-CH_2-CHOH-CH_2OCO-C(CH_3)=CH_2$ ist, wobei mindestens einer der Substituenten $R_{12}$ und $R_{14}$ eine Glycidylgruppe oder eine Gruppe $-CH=CH_2$ $-C(CH_3)=CH_2$ oder $-COOR$ enthalten muss;

n) Diketopyrrolopyrrole der Formel IX, worin $R_{15}$ Wasserstoff, Halogen, Methyl, Methoxy, Cyano, Phenyl oder eine Gruppe $-COOR$ bedeutet, Z Wasserstoff, eine Glycidylgruppe oder eine Gruppe $-CH_2-CH=CH_2$ oder $-CH_2-C(CH_3)=CH_2$ ist und R eine Glycidylgruppe oder eine Gruppe $-CH_2-CH=CH_2$, $-CH_2-C(CH_3)=CH_2$, $\text{-}(CH_2)_z\text{-}OCO-C(CH_3)=CH_2$ oder $-CH_2-CHOH-CH_2OCO-C(CH_3)=CH_2$ bedeutet, mit der Bedingung, dass mindestens einer der Substituenten $R_{15}$ oder Z eine Glycidylgruppe oder eine Gruppe $-CH=CH_2$, $-C(CH_3)=CH_2$ oder $-COOR$ enthält.

o) Anthrachinone der Formeln XII oder XIII, worin X, welches über eine zweiwertige Gruppe $-NHCO\text{-}(CH_2)_p\text{-}$ an den aromatischen Ring gebunden ist, eine Gruppe der Formel $-CH=CH_2$ $-C(CH_3)=CH_2$ oder $-COOR$, worin R eine Glycidylgruppe oder eine Gruppe $-CH_2-CH=CH_2$, $-CH_2-C(CH_3)=CH_2$, $\text{-}(CH_2)_n\text{-}OCO-CH=CH_2$, $\text{-}(CH_2)_n\text{-}OCO-C(CH_3)=CH_2$ oder $-CH_2-CHOH-CH_2OCO-C(CH_3)=CH_2$ ist, bedeutet, n und p die oben angegebene Bedeutung haben, $R_{17}$ und $R_{18}$ Wasserstoff und $R_{16}$ Wasserstoff, Halogen, Hydroxy oder Amino sind.

Die Pigment- bzw. Farbstoffderivate der Formel $P\text{-}(X)_m$ werden der zu polymerisierenden Monomerenmischung zweckmässig in einer Menge von 0,005 bis 30 Gew.-%, bevorzugt 0,15 bis 10 Gew.-%, jeweils bezogen auf die Monomeren, zugegeben. Die Zugabe kann zu Beginn, gemeinsam mit den Monomeren, kontinuierlich während oder gegen Ende des Polymerisation-/Kondensationsvorganges erfolgen.

Die Polymerisation als solche kann in an sich bekannter Weise, z.B. wie in US-PS 4 232 135, US-PS 4 546 046, US-PS 4 290 932, US-PS 4 206 099, GB-A 1 156 012 und US PS 4 695 607 und den darin enthaltenen Literaturzitaten beschrieben, durchgeführt werden.

Bevorzugt ist die Herstellung der erfindungsgemässen Polymermikropartikel nach einem Verfahren der Dispersionspolymerisation, wie es z.B. die US-PS 4 232 135 oder die GB-A 1 156 012 offenbaren oder nach dem Gruppen-Transfer-Polymerisationsverfahren, wie es z.B. in der US-PS 4 695 607 beschrieben ist.

In der gemäss solchen Verfahren anfallenden Dispersion, die die erfindungsgemässen Polymermikropartikel enthält, fallen neben den eigentlichen Mikropartikeln, die den geforderten Spezifikationen (Grössenverteilung 0,01-20 µm und Vernetzung) entsprechen, auch noch andere Anteile von Polymeren an, die keine Mikropartikel im obigen Sinn sind. Diese stören bei der Anwendung im allgemeinen nicht. Die Mikropartikel werden bevorzugt in der Synthesestufe als solche isoliert bzw. von anderen Poly meranteilen gereinigt. Dies kann beispielsweise auch durch Umfällen in geeigneten Lösungsmitteln erfolgen, in denen die nicht vernetzten Anteile löslich sind. Man erhält auf diese Weise gereinigte Mikropartikel-Dispersionen, aus denen die Partikel selbst durch geeignete, an sich bekannte Methoden, z.B. durch Spritztrocknen, vor allem aber

Gefriertrocknen, isoliert werden können. Die isolierten Mikropartikel können dann ebenfalls durch in der Polymerchemie übliche Methoden charakterisiert werden, z.B. mittels Lichtstreuungsmessungen, Rasterelektronenmikroskopie, Feststellung der Grössenverteilung, der Form usw. Wie bereits früher erwähnt, weisen die Mikropartikel eine im Idealfall kugel-bis eiförmige Gestalt auf. Isolierung und Charakterisierung von Polymermikropartikeln sind in der Literatur vielfach beschrieben, so z.B. von Funke et al., Progr. Colloid Polymer Sci. 57, 48-53 (1975).

Für praktische Zwecke, wie z.B. die Verwendung in Lacken, können die Mikropartikel auch in dem Lösungsmittel, in dem die Polymerisation stattfand, als Dispersion weiterverarbeitet werden. Als Dispersionsmittel kommen insbesondere aromatische, aliphatische und cycloaliphatische Kohlenwasserstoffe, aber auch andere, z.B. Wasser, in Betracht. Beispiele für Kohlenwasserstoffe sind Benzol, Toluol und vor allem höher siedende aliphatische Kohlenwasserstofffraktionen, z.B. mit einem Siedebereich von 100-200°C. Die erfindungsgemässen Dispersionen enthalten die Mikropartikel z.B. in einer Menge von 10 bis 90 Gew.-%, insbesondere 20 bis 80 % z.B. 40 bis 80 %, bezogen auf die Dispersion.

Die erfindungsgemässen farbigen Polymermikropartikel können wie Pigmente bzw. wie polymerlösliche Farbstoffe in hochmolekulares organisches Material zu dessen Färbung eingearbeitet werden. Man erhält überraschend hochtransparente, ggf. fluoreszierende Ausfärbungen, die sich durch sehr gute Allgemeinbeständigkeiten und insbesondere durch ihre hohe Ausblüh-und Migrationsbeständigkeit bzw. Ueberlackierechtheit auszeichnen.

Obwohl die erfindungsgemässen Mikropartikel sehr gute Lichtechtheit aufweisen, kann es ggf. von Vorteil sein, zusätzlich Lichtschutzmittel einzupolymerisieren, wie dies beispielsweise in EP-A 226 538 beschrieben ist. In dieser Weise dienen die erfindungsgemässen Polymermikropartikel zusätzlich auch als Lichtschutzmittel für das hochmolekulare organische Material, in welches sie eingearbeitet werden.

Hochmolekulare organische Materialien, die mit den erfindungsgemässen Polymermikropartikeln gefärbt werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyacrylate, Polymethacrylate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Bezogen auf das einzufärbende hochmolekulare organische Material kann man die erfindungsgemässen Polymermikropartikel z.B. in einer Menge von 0,01 bis 60 Gew.-%, vorzugsweise von 0,1 bis 20 Gew.-%, einsetzen.

Die Einfärbung der hochmolekularen organischen Substanzen mit den erfindungsgemässen Polymermikropartikeln erfolgt beispielsweise derart, dass man die Polymermikropartikel in Form von Pulver oder als Dispersion diesen Substraten unter Verwendung von Walzwerken, Misch- oder Mahlapparaten zumischt. Das gefärbte Material wird hierauf nach an sich bekannten Verfahren, wie Kalandrieren, Pressen Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Polymermikropartikel in die Polymeren eingearbeitet werden. Es ist ferner möglich, zwecks Erzielung verschiedener Farbtöne den hochmolekularen, organischen Stoffen neben den erfindungsgemässen Polymermikropartikeln noch Füllstoffe bzw. andere farbgebende Bestandteile, wie Weiss-, Bunt- oder Schwarzpigmente, oder Effektpigmente, wie Aluminiumbroncen, Perlglanz- und Graphitpigmente, in beliebigen Mengen zuzufügen.

Zum Färben von Lacken und Druckfarben werden die hochmolekularen organischen Materialien und die erfindungsgemässen Polymermikropartikel gegebenenfalls zusammen mit Zusatzstoffen, wie Füllmitteln, Pigmenten, Siccativen oder Weichmachern, in einem gemeinsamen organischen Lösungsmittel oder Lösungsmittelgemisch fein dispergiert bzw. gelöst. Mann kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie hohe Farbstärke, gute Dispergierbarkeit, ausgezeichnete Ueberlackierbeständigkeit, sehr gute Migrations-, Hitze-, Licht- und Wetterbeständigkeit, sowie Verzugsfreiheit in Kunststoffen, aus. Es können damit Ausfärbungen höchster Transparenz und Beschichtungen mit hohem Glanz erhalten werden.

Je nach Konstitution des Farbstoff- bzw. Pigmentderivats der Formel $P{+}X)_m$ erhält man auch stark fluoreszierend gefärbte Polymermikropartikel, welche in die entsprechenden Substrate eingearbeitet, leuchtende stark fluoreszierende Artikel ergeben.

Dank dieser Eigenschaft können die erfindungsgemässen fluoreszierend farbigen Polymermikorpartikel z.B. in Fluoreszenz-Solarkollektoren, in Lichtsammelsystemen, in der Laser-Technik, in Photovoltazellen,

insbesondere aber zur Herstellung von fluoreszierenden Markierungs-, Signal- und Warnfarben, Spielzeugartikeln, fluoreszenz-aktivierten Displays der Elektronikindustrie, fluoreszierend eingefärbten Textilgütern, sowie zum Bedrucken von Papier, beispielsweise für Poster und Verpackungen, verwendet werden.

Sie eignen sich aber auch als Farbmittel für farbphotographische Materialien.

Die erfindungsgemässen Polymermikropartikel erlauben es gezielt substratverträgliche Farbkörperpräparate herzustellen, die je nach Aufarbeitungsverfahren auch direkt in Granulatform gewonnen werden können.

Von besonderem Interesse ist die Verwendung der erfindungsgemässen Polymermikropartikel als Färbemittel für Lacke.

Ein weiterer Gegenstand der Erfindung sind demnach Beschichtungszusammensetzungen, in denen das filmbildende Material

a) 30 bis 95 Vol-% einer dispersen Phase, die erfindungsgemässe farbige Mikropartikel enthält und

b) 70 bis 5 Vol-% einer flüssigen kontinuierlichen Phase mit einer Viskosität von 0,1 bis 30 Poise bei Raumtemperatur, die dazu fähig ist, in ein filmbildendes Polymer zu härten, enthält, wobei das Gesamtvolumen von a) und b) 100% beträgt und die disperse Phase an der Lackhärtung teilnimmt. Die Phase b) kann dabei ebenfalls erfindungsgemässe Polymermikropartikel enthalten. Die disperse Phase enthält vorzugsweise mindestens 50 Vol-% Mikropartikel.

Bevorzugt sind Beschichtungszusammensetzungen, in denen das filmbildende Material 30 bis 85 Vol-% der dispersen Phase, die mindestens 50 Vol-% erfindungsgemässe Mikropartikel enthält, und 70-15 Vol-% der flüssigen kontinuierlichen Phase, die bei Raumtemperatur eine Viskosität von 0,1 bis 20 Poise aufweist.

Der grundsätzliche Aufbau solcher Beschichtungszusammensetzungen geht z.B. aus der US-PS 4 232 135, US-PS 4 546 046, US-PS 4,290,932, US-PS 4 206 099, GB-A 1,156,012 und insbesondere aus der EP-A 226 538 hervor. Die Teilchen der dispersen Phase besitzen im allgemeinen eine Grösse oder Grössenverteilung im Bereich von 0,1 bis 20 µm.

Die disperse Phase besteht im Prinzip ausschliesslich aus Polymermikroteilchen und ggf. Lösungsmittel, sie kann allerdings für spezielle Anwendungen ausser den Mikropartikeln und gegebenenfalls Lösungsmittel noch Weiss-, Bunt-, Schwarz- oder Perlglanzpigmente, Metall-, Füllstoff und/oder Streckmittelteilchen enthalten, wie diese üblicherweise in Beschichtungszusammensetzungen verwendet werden. Diese Teilchen weisen dann zweckmässig eine in der Beschichtungstechnik übliche Grösse von z.B. 0,1 bis 5 µm auf.

Wie schon erwähnt, ist es bevorzugt, die erfindungsgemässen Mikropartikel gemäss der US-PS 4 232 135 in einer inerten Flüssigkeit und in Gegenwart eines amphipatischen Dispergiermittels herzustellen, wobei eine stabile Dispersion der Polymermikroteilchen entsteht. Pigment-, Metall-, Füllstoff- und/oder Streckmittelteilchen können in dieser Dispersion durch Reste des amphipathischen Dispergiermittels ebenfalls stabilisiert werden. Die auf diese Weise erhaltene disperse Phase kann anschliessend mit der kontinuierlichen Phase zu einer Beschichtungszusammensetzung vereinigt werden. Für nähere Einzelheiten hierzu sei auf die US-PS 4 232 135 und insbesondere auf die EP-A 226 538, S. 52 - 57 verwiesen.

Bevorzugt ist die Verwendung der erfindungsgemässen Polymermikropartikel als Färbemittel für Ingenieurwerkstoffe (Engineering Plastics), wie z.B. Polycarbonate, Polyacrylate, Polymethacrylate, ABS, Polyester, Polyamide, Polyetherketone und Polyurethane.

Die nachfolgenden Beispiele dienen der weiteren Erläuterung der verschiedenen Aspekte der vorliegenden Erfindung, stellen jedoch keine wie immer geartete Einschränkung des allgemein anwendbaren Prinzips der vorliegenden Erfindung dar.

Beispiel 1:

A. Herstellung eines amphipathischen Dispersionsmittels

I. Herstellung eines 12-Hydroxystearinsäure/Dimethylolpropionsäurecopolyesters

In einen 2,5 l Sulfierkolben, der mit Rührer, Wasserabscheider und Stickstoffeinleitung ausgerüstet ist, gibt man 1350 g 12-Hydroxystearin säure und 100,5 g 2,2-Bis(hydroxymethyl)propionsäure sowie 145 g Alkangemisch (Siedebereich 180-220° C) und 3 g Methansulfonsäure als Katalysator. Das Reaktionsgemisch wird nun auf 156° C erhitzt, wobei während 6 stunden ca. 78 g $H_2O$ abgeschieden werden (Lösung A).

II. Herstellung eines Glycidylmethacrylat-Adduktes von I

500 g der erhaltenen Lösung A werden in einem mit $N_2$-Einleitung und Rückflusskühler versehenen 1,5 l-Sulfierkolben mit 46,5 g Methacrylsäureglycidylester, 1,5 g Dimethyl-aminododekan, 0,5 g Hydrochinon und 20 g Alkangemisch (Siedebereich 180-220°) sechs Stunden am Rückfluss erhitzt (Lösung B).

III. Copolymerisation

In einem 1,5 l-Sulfierkolben mit Rührer, Rückflusskühler und Stickstoffeinleitung werden 375 g Methyl-ethyl-keton vorgelegt und auf Rückfluss (80° C) erhitzt. Dazu tropft man während 2 Stunden folgende Mischung:

| | | |
|---|---|---|
| 213,5 | g | der Lösung B |
| 184 | g | Methacrylsäuremethylester |
| 20,5 | g | Methacrylsäure |
| 2,15 | g | Azodiisobutyronitril |
| 2,15 | g | n-Octylmercaptan |

Nachdem das ganze Gemisch zugetropft ist, gibt man nochmals 0,3 g Azodiisobutyronitril hinzu und kocht während weiteren 2 Stunden am Rückfluss. Danach wird die Lösung verdünnt mit 580 g ®Solvesso 100 (Alkangemisch; Siedebereich 162-177°C) und destilliert ca. 40 g Lösungsmittelgemisch ab. Man erhält eine Lösung mit einem Feststoffgehalt von ca. 30 % (Lösung C).

B) Herstellung einer Polyester-Mikropartikel-Dispersion mit einpolymerisiertem Pigment

In einen 750 ml Sulfierkolben, ausgerüstet mit Thermometer, Rührer, Wasserabscheider, Stickstoffüberleitung und Tropftrichter, gibt man

| | | |
|---|---|---|
| 124,6 | g | Isophthalsäure |
| 60,4 | g | Trimethylolpropan |
| 93,6 | g | Neopentylglykol |
| 6,5 | g | Perylen-3,4,9,10-tetracarbonsäure-N,N′-bis-(12-dodecansäure)-imid und |
| 1 | g | Dibutylzinnoxid |

Man erhitzt nun das Gemisch auf 180°C und lässt als Schleppmittel für die Wasserabscheidung langsam etwas Xylolisomerengemisch zutropfen, so dass die Innentemperatur von 180°C erhalten bleibt. Nach ca. 5 Stunden Rückflussieren beträgt die Menge abgeschiedenen Wassers 45 ml. Die Innentemperatur steigt dabei auf 195°C an. Es entsteht eine klare dunkelrote Schmelze. Man lässt diese nun auf 140°C abkühlen und versetzt sie danach mit 94,6 g Adipinsäure. Nun wird wieder auf 160°C erhitzt. Man gibt darauf eine auf 150°C vorgewärmte Lösung aus 53,6 g Lösung C in 200 ml ®Solvesso 100 hinzu und erhitzt unter raschem Rühren auf ca. 165°C (Rückfluss). Während der folgenden 2 Stunden lässt man nochmals eine Lösung aus 20 g Lösung C in 20 ml ® Solvesso 100 zutropfen. Nachdem eine Gesamtmenge von 60 ml Wasser abgeschieden wurde, werden noch 150 ml Lösungsmittel abdestilliert. Man erhält nach dem Abkühlen eine homogene Polyester-Mikropartikel-Dispersion mit einem Festkörpergehalt von ca. 75 - 80 %, die ca. 2 % Pigmentfarbstoffderivat, bezogen auf den Festkörpergehalt enthält (Dispersion $D_1$).

Beispiel 2: Herstellung einer Polymethacrylat-Mikropartikel-Dispersion mit einpolymerisiertem Pigmentfarbstoff

In einem 750 ml Sulfierkolben, ausgerüstet mit Thermometer, Rührer, Rückflusskühler, Stickstoffüberleitung und Tropftrichter, gibt man 142 ml ®Solvesso 100 (Alkangemisch, Siedebereich 162-177°C), 46 ml Hexan, 232 ml Toluol.

Man erhitzt das Gemisch auf Rückfluss (ca. 90°C). Dazu gibt man eine Lösung bestehend aus:

9,7 g Methylmethacrylat
0,2 g Methacrylsäure
0,8 g Azodiisobutyronitril
3,6 g der Lösung C (erhalten nach Beispiel 1, A) und
7,2 g des blauen Pigmentfarbstoffes der Formel

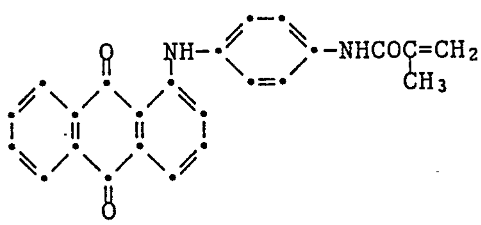

(XIV)

Man lässt 30 Minuten rückflussieren. Es entsteht eine klare dunkelblau gefärbte Reaktionslösung. Darauf wird während 3 Stunden eine Lösung bestehend aus

| | |
|---|---|
| 184,8 g | Methylmethacrylat |
| 1,9 g | Methacrylsäure |
| 1,9 g | Glycidylmethacrylat |
| 2,5 g | Azodiisobutyronitril |
| 38,8 g | der Lösung C (erhalten nach Beispiel 1, A) und |
| 0,4 g | Dimethylaminoethanol |

zugetropft. Mit zunehmender Zeit des Zutropfens wird das Reaktionsgemisch etwas viskoser. Nach dem Zutropfen werden bei ca. 100°C Innentemperatur ca. 150 ml Lösungsmittelgemisch abdestilliert. Dazu ersetzt man den Rückflusskühler durch einen Destillationsaufsatz. Die Badtemperatur beträgt dabei ca. 140°C. Man erhält so eine homogene, tintenblaue, leicht viskose Polymethacrylat-Mikropartikel-Dispersion mit einem Festkörpergehalt von ca. 45 %, die 3 % des Pigmentfarbstoffes enthält. Die Lösung wird abgekühlt und auf 8 Liter Hexan ausgefällt. Man nutscht die blauen Mikropartikel ab und trocknet sie im Vakuumtrockenschrank. Man erhält 140 g baulgefärbte Mikropartikel. Durch Gelpermeationschromatographie (GPC) werden folgende Molekulargewichtswerte ermittelt: $\overline{M}n$-Wert 3662, $\overline{M}w$-Wert 12528.

Beispiel 3:
Verfährt man genau gleich wie in Beispiel 2 beschrieben, mit den gleichen Mengen der Ausgangsprodukte und lässt aber nach beendigtem Zutropfen noch weitere 7 Stunden am Rückfluss reagieren, so erhält man nach dem Ausfällen der Mikropartikel 145,9 g Festkörpersubstanz. Molekularegewichtswerte (GPC): $\overline{M}n$-Wert 3894, $\overline{M}w$-Wert 15572.

Beispiel 4:
Man verfährt wieder genau gleich wie in Beispiel 2 ausführlich beschrieben. Anstelle von 7,2 g des blauen Pigmentfarbstoffes setzt man aber 12 g des gleichen Pigmentfarbstoffes ein (5 % bezogen auf den Gesamtfestkörpergehalt) und erhält nach dem Ausfällen 106 g tiefblau gefärbte Mikropartikel. Die Molekulargewichtswerte (GPC): $\overline{M}n$-Wert 3635, $\overline{M}w$-Wert 15504.

Beispiel 5:
Man verfährt wieder genau gleich, wie in Beispiel 2 ausführlich beschrieben. Anstelle des in Beispiel 2 erwähnten Pigmentfarbstoffes setzt man die gleiche Menge des gelben Pigmentfarbstoffes der Formel

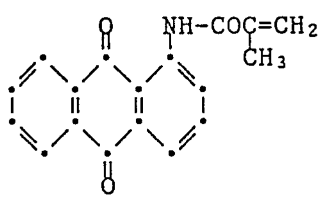

(XV)

ein.

Man erhält eine gelborange, viskose Lösung, die ebenfalls auf 8 Liter Hexan ausgefällt wird. Die gelben Mikropartikel werden abgenutscht und getrocknet. Man erhält 167,3 g gelbe Mikropartikel. Die GPC-Analyse zeigt folgende Molekulargewichtswerte: $\overline{M}$n-Wert 6239, $\overline{M}$w-Wert 15195.

Beispiel 6: Herstellung einer lichtstabilisierten Polymethacrylat-Mikropartikel-Dispersion mit einpolymerisiertem Pigmentfarbstoff

Man verfährt wieder genau gleich wie in Beispiel 2 beschrieben. Zur Hauptlösung, die man während 3 Stunden zutropft, gibt man aber zuvor noch 7,2 g 4-Methacryloyloxy-1,2,2,6,6-pentamethylpiperidin. Am Schluss der Reaktionszeit erhält man eine dunkelblaue Reaktionslösung aus der man das tiefblaue Mikropartikel-Granulat durch Ausfällen auf 8 l Hexan isoliert. Man erhält 151,3 g blaue Mikropartikel, die einerseits 3 % Pigmentfarb stoff und andererseits 3 % sterisch gehindertes Amin-Lichtschutzmittel enthalten. Die %-Angaben sind auf den Gesamtfestkörpergehalt bezogen. Die GPC-Analyse zeigt folgende Molekulargewichtswerte: $\overline{M}$n-Wert 6233, $\overline{M}$w-Wert 17528.

Beispiel 7:

A) Herstellung eines lichtstabilisierten amphipathischen Dispersionsmittels

In einem 350 ml Sulfierkorben, ausgerüstet mit Thermometer, Rührer, Rückflusskühler und Stickstoffüberleitung gibt man 74 ml Methylethylketon und erhitzt auf Rückflusstemperatur (ca. 80°C). Dazu tropft man innerhalb von 2 Stunden eine Lösung bestehend aus.

| | | |
|---|---|---|
| 29,3 | g | Methylmethacrylat |
| 3,25 | g | Methacrylsäure |
| 34,2 | g | der Lösung B (erhalten nach Beispiel 1, A I und II) |
| 0,4 | g | Azodiisobutyronitril und |
| 27,4 | g | 2-{2-Hydroxy-3-tert-butyl--5-[2-(2-acryloyloxycyclohexyloxycarbonyl)-ethyl]-phenyl}-benztriazol |

Danach gibt man erneut 0,1 g Azodiisobutyronitril hinzu und lässt weitere 2 Stunden am Rückfluss kochen. Danach gibt man 100 ml ®Solvesso 100 (Alkangemisch, Sdp. 162-177°C) hinzu und kühlt die viskose Lösung ab (= Lösung E).

B) Herstellung einer lichtstabilisierten Polymethacrylat-Mikropartikel-Dispersion mit einpolymerisiertem Pigmentfarbstoff

In einem 750 ml Sulfierkorben, ausgerüstet mit Thermometer, Rührer, Wasserabscheider, Stickstoffüberleitung und Tropftrichter gibt man 142 ml ®Solvesso 100 (Alkangemisch, Siedebereich 162-177°C), 46 ml Hexan und 232 ml Toluol. Dieses Lösungsmittelgemisch wird auf Rückflusstemperatur (ca. 90°C) erhitzt. Nun wird eine Lösung bestehend aus

| | |
|---|---|
| 9,7 g | Methylmethacrylat |
| 0,2 g | Methacrylsäure |
| 0,8 g | Azodiisobutyronitril |
| 3,6 g | Lösung E (erhalten nach Beispiel 7 A) |
| 7,2 g | blauer Pigmentfarbstoff der Formel XIV |

zugegeben. Man kocht das Reaktionsgemisch 30 Minuten am Rückfluss. Zur klaren blauen Reaktionslösung wird nun während 3 Stunden folgendes Gemisch zugetropft:

| | | |
|---|---|---|
| 184,8 | g | Methylmethacrylat |
| 1,9 | g | Methacrylsäure |
| 1,9 | g | Glycidylmethacrylat |
| 2,5 | g | Azodiisobutyronitril |
| 38,6 | g | Lösung E (erhalten nach Beispiel 7 A) |
| 0,4 | g | Dimethylaminoethanol und |
| 4,8 | g | 2-{2-Hydroxy-3-tert-butyl--5-[2-(2-acryloyloxycyclohexyloxycarbonyl)-ethyl]-phenyl}-benztriazol |

Mit zunehmender Dauer des Zutropfens wird die Reaktionslösung viskoser. Man lässt nach dem Zutropfen noch 1 Stunde ausreagieren. Danach kühlt man die dunkelblaue Reaktionslösung ab und fällt die Mikropartikel aus 8 Liter Hexan aus. Nach dem Trocknen erhält man 239,2 g blaue Mikropartikel. Diese enthalten 3 % des Pigmentfarbstoffes und 4 % Lichtschutzmittel, bezogen auf den Gesamtfestkörpergehalt. Die GPC-Analyse zeigt folgende Molekulargewichtswerte: $\overline{M}n$-Wert 4839, $\overline{M}w$-Wert 19710.

Beispiel 8:

A) Herstellung eines lichtstabilisierten amphipathischen Dispersionsmittels
Man wiederholt die Schritte I und II von Beispiel 1

III. Copolymerisation
In einem 1,5 l-Sulfierkolben mit Rückflusskühler und $N_2$-Einleitung werden 375 g Methyl-ethyl-keton vorgelegt und auf Rückfluss (80°C) erhitzt. Dazu tropft man während 2 Stunden folgende Mischung:

| | | |
|---|---|---|
| 213,5 | g | der Lösung B (erhalten nach Beispiel 1 A I und II) |
| 184,0 | g | Methacrylsäuremethylester |
| 20,5 | g | Methacrylsäure |
| 104,0 | g | 4-Acryloyloxy-1,2,2,6,6-pentamethylpiperidin |
| 2,15 | g | Azodiisobutyronitril |
| 2,15 | g | n-Octylmercaptan |

Nachdem die ganze Lösung zugetropft ist, gibt man nochmals 0,3 g Azodiisobutyronitril hinzu und kocht die Lösung während weiteren 2 Stunden am Rückfluss. Danach verdünnt man die Lösung mit 580 g ®Solvesso 100 (Alkangemisch: Siedebereich 162-177°C) und destilliert ca. 40 g Lösungsmittelgemisch ab. Man erhält eine Lösung mit einem Festkörpergehalt von ca. 30 %. Der Gehalt an Lichtschutzmittel (4-Acryloyloxy-1,2,2,6,6-pentamethylpiperidin) beträgt ca. 23,4 % bezogen auf den Festkörpergehalt (= Lösung F).

B) Herstellung einer lichtstabilisierten Polymethacrylat-Mikropartikel-Dispersion mit einpolymerisiertem Pigmentfarbstoff
In einem 750 ml Sulfierkorben, ausgerüstet mit Rührer, Thermometer, Wasserabscheider, Stickstoffüberleitung und Tropftrichter gibt man 142 ml ®Solvesso 100 (Alkangemisch, Siedebereich 162-177° C), 46 ml Hexan und 232 ml Toluol. Dieses Lösungsmittelgemisch wird auf Rückflusstemperatur (ca. 90° C) erhitzt. Dazu gibt man eine Lösung bestehend aus

| | |
|---|---|
| 9,7 g | Methylmethacrylat |
| 0,2 g | Methacrylsäure |
| 0,8 g | Azodiisobutyronitril |
| 5,0 g | Lösung F (erhalten nach Beispiel 8 A III) |
| 4,8 g | 2-{2-Hydroxy-3-tert-butyl-5-[2-(2-acryloyloxycyclohexyloxycarbonyl)-ethyl]-phenyl}-benztriazol |
| 7,2 g | Pigmentfarbstoff der Formel XIV |

und kocht während 30 Minuten am Rückfluss. Darauf lässt man nochmals während 3 Stunden aus einem Tropftrichter eine Lösung aus folgenden Bestandteilen zutropfen:

| | |
|---|---|
| 184,8 g | Methylmethacrylat |
| 1,9 g | Methacrylsäure |
| 1,9 g | Glycidylmethacrylat |
| 2,5 g | Azodiisobutyronitril |
| 50,0 g | Lösung F (erhalten nach Beispiel 8 A III) |
| 0,4 g | Dimethylaminoethanol. |

Mit zunehmender Dauer des Zutropfens wird das Reaktionsgemisch viskoser und dunkelblau gefärbt. Nach beendetem Zutropfen lässt man noch 1 Stunde bei Rückfluss reagieren und destilliert ca. 250 ml Lösungsmittelgemisch ab. Danach lässt man abkühlen und fällt die Reaktionslösung auf 8 Liter Hexan aus. Nach dem Abnutschen und Trocknen erhält man 183,9 g blaue Mikropartikel die mit je 2 % sterisch gehindertem Amin-Lichtschutzmittel und Benzotriazol-Lichtschutzmittel stabilisiert sind und die 3 % Pigmentfarbstoff enthalten. Die %-Angaben beziehen sich immer auf den Gesamtfestkörpergehalt. Die GPC-Analyse zeigt folgende Molekulargewichtswerte: $\overline{M}n$-Wert 4341, $\overline{M}w$-Wert 19181.

Beispiel 9:

Verfährt man genau gleich, wie in Beispiel 8 B beschrieben und setzt anstelle von 7,2 g Pigmentfarbstoff der Formel XIV, 4,0 g des Pigmentfarbstoffes der Formel

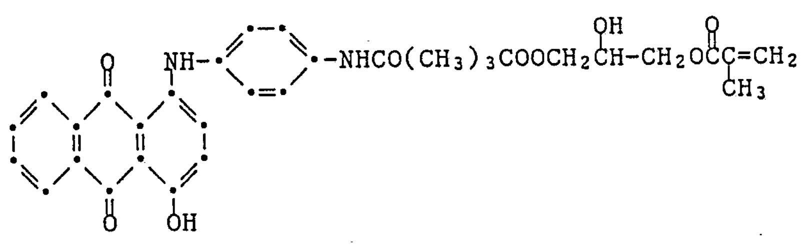

(XVI)

ein, so erhält man 168 g eines blauen Mikropartikelgranulates, das mit je 2 % sterisch gehindertem Amin-Lichtschutzmittel und Benzotriazol-Lichtschutzmittel stabilisiert und mit 2 % Pigmentfarbstoff eingefärbt ist. Die GPC-Analyse zeigt folgende Molekulargewichtswerte: $\overline{M}n$-Wert 4129, $\overline{M}w$-Wert 16543.

Beispiel 10:

Verfährt man analog wie in Beispiel 9 beschrieben, verwendet aber anstelle des anthrachinoiden Farbkörpers der Formel XVI 6,0 g des Isoindolinderivates der Formel

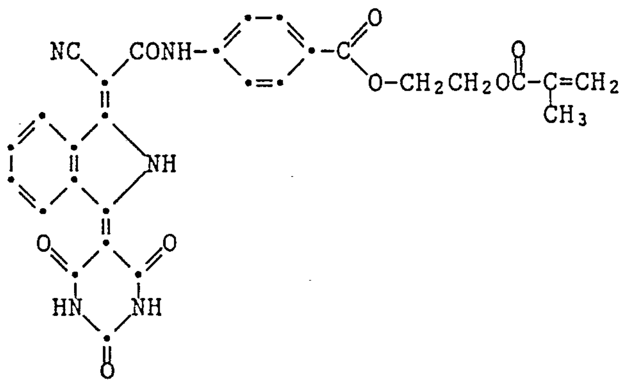

(XVII),

So erhält man ein gelbes Mikropartikelgranulat mit analog guten Eigenschaften.

Beispiel 11:
Verfährt man analog wie in Beispiel 9 beschrieben, verwendet aber anstelle des anthrachinoiden Farbkörpers der Formel XVI 6,0 g des Cu-Phthalocyaninderivates der Formel

$Cu\text{-}Pc\text{-}(SO_2NH\text{-}(CH_2)_4O\overset{O}{\overset{\|}{C}}C(CH_3)=CH_2)_3$ (XVIII),

worin Cu-Pc Kupferphthalocyanin bedeutet, so erhält man ein blaues Mikropartikelgranulat mit analog guten Eigenschaften.

Beispiel 12:
Verfährt man analog wie in Beispiel 9 beschrieben, verwendet aber anstelle des anthrachinoiden Farbkörpers der Formel XVI 6,0 g des Diketopyrrolopyrrolpigmentes der Formel

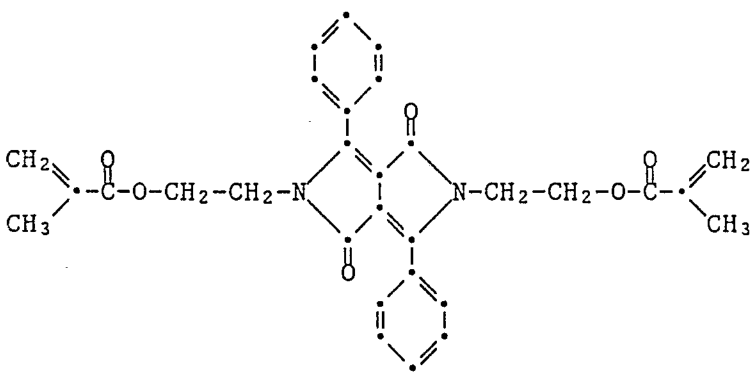

(XIX),

So erhält man ein orangegefärbtes Mikropartikelgranulat mit analog guten Eigenschaften.

Beispiel 13:
Eine Mischung von 5,0 g des nach Beispiel 9 erhaltenen blauen Polymermikropartikelgranulats, 1,0 g Antioxidans (®IRGANOX 1010, CIBA-GEIGY AG) und 1000 g Polyethylen HD Granulat (®VESTOLEN A 60-16, HUELS) wird während 15 Minuten in einer 3 l-Glasflasche auf einem Rollbock vorgemischt. Danach wird die Mischung zweimal durch einen Einwellenextruder extrudiert und anschliessend granuliert. Das so erhaltene Granulat wird dann auf der Spritzgussmaschine (®Allround Arburg 200) bei 220°C mit einer Verweilzeit von 5 Minuten zu Platten verspritzt. Die so erhaltenen Platten weisen gleichmässig farbstarke blaue Färbungen auf.

Beispiel 14:
Verfährt man analog wie in Beispiel 13 beschrieben, verwendet aber neben dem Buntpigment 10 g Titandioxid ®KRONOS RN 57-P (KRONOS Titan GmbH), so erhält man blaue Pressplatten mit ebensoguten Hitzebeständigkeiten.

Beispiel 15:
100 g Polymethylacrylatgranulat (DEGALAN 7E® der Firma DEGUSSA AG) und 1,0 g des nach Beispiel 8 erhaltenen Polymermikropartikelgranulats werden während 20 Minuten in einer 500 ml-Glasflasche auf einem Rollbock vorgemischt. Danach wird die Mischung auf einem Einwellenextruder zu einem Band extrudiert. Man erhält ein transparentes stark blau gefärbtes Kunststoffband, welches ausgezeichnete Hitze- und Lichtbeständigkeiten aufweist.

Beispiel 16:

Verfährt man analog wie in Beispiel 15 beschrieben, verwendet aber anstelle von Polymethylmethacrylat ein Polycarbonatgranulat (MAKROLON 2800® der Firma BAYER), so erhält man transparente stark blau gefärbte Bänder mit ausgezeichneten Hitze- und Lichtbeständigkeiten.

Beispiele 17-19:

Je 200 mg der gemäss Beispiele 3 bis 5 erhaltenen Polymermikropartikel werden mit 7,3 ml Dioctylphthalat und 13,3 g eines stabilisierten Polyvinylchlorids vom Typ ®LONZA E722 in einem Becherglas mit einem Glasstab gut vermischt. Das Gemisch wird auf einem Walzenstuhl während 5 Minuten bei 160°C zu einer dünnen Folie verarbeitet. Die jeweils erhaltenen Folien weisen eine farbstarke gleichmässig blaue Färbung von guter Lichtechtheit auf.

Beispiel 20:

10 g der gemäss Beispiel 1 erhaltenen Polyester-Mikropartikel-Dispersion $D_1$ werden zusammen mit 40 g eines Alkydmelaminlacksystems, bestehend aus 60 g kurzöligem Alkydharz ®BECKOSOL 27-320 (Reichhold Chemie AG), 60 %ig in Xylol, 36 g Melaminharz ®SUPER-BECKAMIN 13-501 (Reichhold Chemie AG) 50 %ig in Xylol, 12 g Xylol und 2 g Ethylenglykolmonomethylether in einem Dispergiergerät ®DISPERMAT (ex Hediger, Bassersdorf) mit 1 mm Glaskugeln homogen dispergiert. Nach Trennung der Glaskugeln kann der Lack auf Substrate wie Karton, Metalloberflächen beispielsweise Aluminium, oder geeignete Kunststoffe appliziert werden. Mann erhält reine, lichtechte, transparente, sehr farbstarke orange fluoreszierende Färbungen mit ausgezeichneter Ueberlackierechtheit.

## Patentansprüche

1. Farbige Polymermikropartikel mit einer Teilchengrösse zwischen 0,01 und 0,5 µm, erhältlich durch Copolymerisation in an sich bekannter Weise von einer oder mehreren verschiedenen ein- oder mehrfach ethylenisch ungesättigten Verbindungen und/oder einer oder mehreren Glycidylverbindungen und/oder einem oder mehreren verschiedenen Monomeren, ausgewählt aus der Gruppe der Polyalkohole, Polycarbonsäuren, Hydroxycarbonsäuren, Lactone und Aminocarbonsäuren, dadurch gekennzeichnet, dass zusätzlich mindestens ein Farbstoff- oder Pigmentderivat der Formel

$P{+}X)_m$ (I)

einpolymerisiert wird, worin P den Rest eines organischen Pigments oder Farbstoffs bedeutet, m eine Zahl von 1 bis 4 bedeutet, X eine zur Polymerisation befähigte reaktive Gruppe der Formel -OH, $-NH_2$,

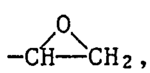

$-CNO$, $-CH=CH_2$, $-C(CH_3)=CH_2$, $-COCH=CH_2$, $-COC(CH_3)=CH_2$,

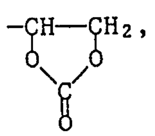

-CONHR oder -COOR, darstellt,

worin R Wasserstoff, $C_1$-$C_4$-Alkyl, eine Glycidylgruppe oder eine Gruppe $-CH_2-CH=CH_2$, $-CH_2-C(CH_3)=CH_2$, $-(CH_2)_n-OCO-CH=CH_2$, $-(CH_2)_n-OCO-C(CH_3)=CH_2$, $-(CH_2)_n-OH$, $-(CH_2)_n-CHOH-CH_2OCO-C(CH_3)=CH_2$,

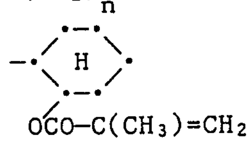

oder

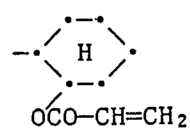

ist, wobei jede reaktive Gruppe entweder direkt oder über eine zweiwertige Gruppe $-(CH_2)_n-$, $-(CH_2)_n-O-$, $-(CH_2)_n-O-CH_2-$, $-(CH_2)_n-CHOH-$,

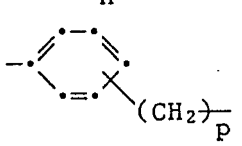

,

$-(CH_2)_n-CHOH-CH_2O-$, $-SO_2-NH-(CH_2)_n-$ ,

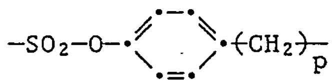

oder $-NHCO-(CH_2)_p-$,

worin n eine Zahl von 1 bis 18 und p eine Zahl von Null bis 18 bedeuten, an einen aromatischen Ring oder ein Stickstoffatom des Pigment- oder Farbstoffmoleküls gebunden ist.

2. Polymermikropartikel gemäss Anspruch 1, dadurch gekennzeichnet, dass mindestens ein Pigmentderivat der Formel I einpolymerisiert wird.

3. Polymermikropartikel gemäss Anspruch 1, dadurch gekennzeichnet, dass mindestens eines der Perylentetracarbonsäurediimide der Formel

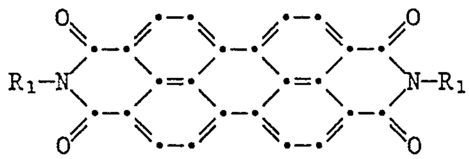 (II),

worin

$R_1$ eine Gruppe

$-(CH_2)_n-OH$, $-(CH_2)_n-COOR$, $-(CH_2)_n-O-Glycidyl$, $-(CH_2)_n-OCO-CH=CH_2$, $-(CH_2)_n-OCO-C(CH_3)=CH_2$ oder

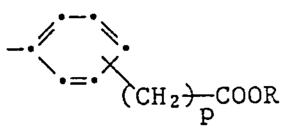

ist, worin R, n und p die in Anspruch 1 angegebene Bedeutung haben, einpolymerisiert wird.

4. Polymermikropartikel gemäss Anspruch 1, dadurch gekennzeichnet, dass mindestens eines der Chinacridone der Formel

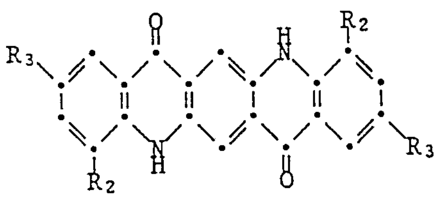 (III),

worin $R_2$ und $R_3$ unabhängig voneinander Wasserstoff, Halogen, $C_1$-$C_{18}$-Alkyl, $C_1$-$C_4$-Alkoxy, Phenyl, eine Gruppe -CONHR′, worin R′ $-(CH_2)_n-OH$ oder $-(CH_2)_n-COOR$ ist, oder eine Gruppe $-(CH_2)_n-OH$ oder $-(CH_2)_p-COOR$ bedeuten und R, n und p die in Anspruch 1 angegebene Bedeutung haben, mit der Bedingung, dass mindestens eines von $R_2$ und $R_3$ eine Gruppe -OH oder -COOR enthält, einpolymerisiert wird.

5. Polymermikropartikel gemäss Anspruch 1, dadurch gekennzeichnet, dass mindestens eines der Kupferphthalocyanine der Formel

$CuPc-(Y)_m$ (IV),

worin CuPC ein Kupferphthalocyaninrest ist, Y eine an einen aromatischen Ring des Kupferphthalocyanins gebundene Gruppe

$-SO_2-NH-(CH_2)_n-OR''$, $-SO_2-NH-(CH_2)_n-COOR$,

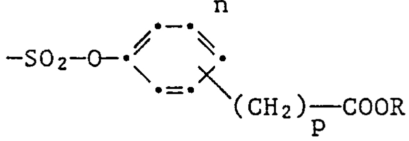

oder $-(CH_2)_p-COOR$

bedeutet, R″ Wasserstoff, $-CO-CH=CH_2$ oder $-CO-C(CH_3)=CH_2$ ist und R, m, n und p die in Anspruch 1 angegebene Bedeutung haben, einpolymerisiert wird.

6. Polymermikropartikel gemäss Anspruch 1, dadurch gekennzeichnet, dass mindestens eines der Dioxazine der Formeln

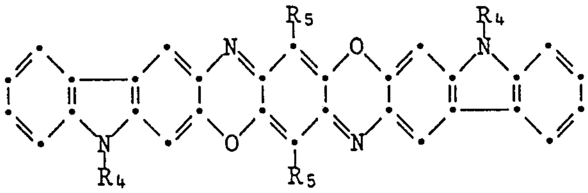

(V)

oder

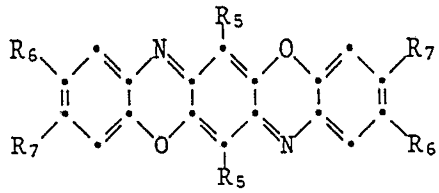

(VI)

worin $R_4$ Wasserstoff, $C_1$-$C_{18}$-Alkyl, eine Gruppe $-(CH_2)_n-OH$ oder $-(CH_2)_n-COOR$ ist, $R_5$ Wasserstoff, Halogen oder eine Gruppe -NHCOR‴ bedeutet, $R_6$ Wasserstoff, eine Gruppe $-O-(CH_2)_r-H$ oder $-O-(CH_2)_r-OH$ und $R_7$ Wasserstoff, eine Gruppe -CONHR, -COOR oder -NHCOR‴ bedeuten, R‴ eine Gruppe $-CH=CH_2$, $-C(CH_3)=CH_2$ oder $-(CH_2)_r-OH$ ist, r eine Zahl von 1 bis 12 bedeutet und R, n und p die in Anspruch 1 angegebene Bedeutung haben, mit der Bedingung, dass mindestens eines von $R_4$ und $R_5$ in Formel V und mindestens eines von $R_5$, $R_6$ und $R_7$ in Formel VI eine Gruppe -OH, -COOR oder -NHCOR‴ enthält, einpolymerisiert wird.

7. Polymermikropartikel gemäss Anspruch 1, dadurch gekennzeichnet, dass mindestens eines der Isoindoline der Formeln

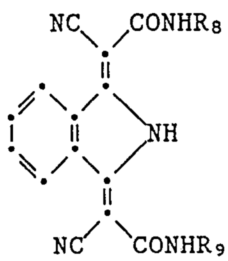

oder

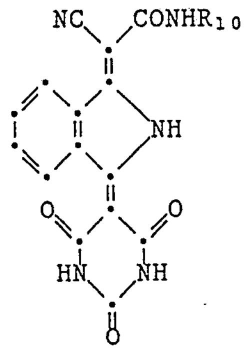

(VII) (VIII) ,

worin $R_8$ eine Gruppe

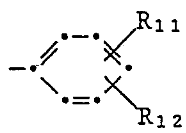

ist,

$R_9$ Wasserstoff, $C_1$-$C_{18}$-Alkyl, $C_1$-$C_{18}$-Hydroxyalkyl, Benzyl, eine Gruppe $-CH_2-CH=CH_2$, $-CH_2-C(CH_3)=CH_2$ oder

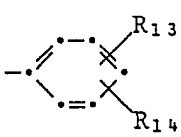

bedeutet,
$R_{10}$ die gleiche Bedeutung wie $R_8$ hat und zusätzlich noch $C_1$-$C_{18}$-Hydroxyalkyl sein kann,
$R_{11}$, $R_{12}$, $R_{13}$ und $R_{14}$ unabhängig voneinander Wasserstoff-, $C_1$-$C_{18}$-Alkyl, $C_1$-$C_4$-Alkoxy, Halogen, Trifluormethyl, eine Gruppe $-CO-CH=CH_2$, $-CO-C(CH_3)=CH_2$ oder $-(CH_2)_p-COOR$ bedeuten, worin R und p die in Anspruch 1 angegebene Bedeutung hat, mit der Bedingung, dass mindestens einer der Substituenten $R_9$, $R_{10}$, $R_{11}$, $R_{12}$, $R_{13}$ oder $R_{14}$ eine Gruppe -OH, $-CH=CH_2$, $-C(CH_3)=CH_2$ oder -COOR

enthält, einpolymerisiert wird.

8. Polymermikropartikel gemäss Anspruch 1, dadurch gekennzeichnet, dass mindestens eines der Diketopyrrolopyrrole der Formeln

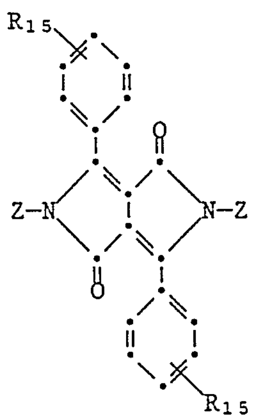 ,  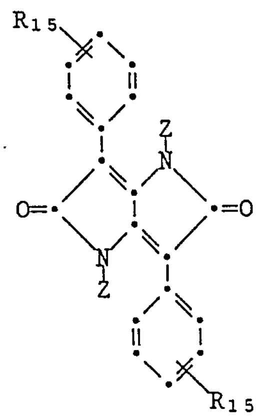  oder  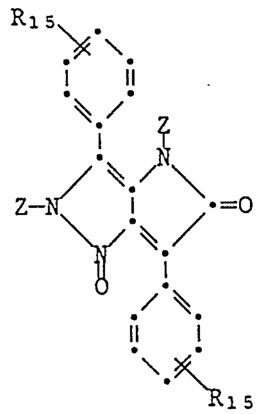

(IX) (X) (XI),

worin $R_{15}$ Wasserstoff, Halogen, $C_1$-$C_{18}$-Alkyl, $C_1$-$C_{18}$-Alkyl-S-, $C_1$-$C_{18}$-Alkyl-O-, Cyano, Phenyl oder eine Gruppe -COOR bedeutet und Z Wasserstoff, eine Glycidylgruppe oder eine Gruppe $-CH_2-CH=CH_2$, $-CH_2-C(CH_3)=CH_2$, $-(CH_2)_n-OH$, $-(CH_2)_n-COOR$ oder $-CH_2-CHOH-CH_2OCO-C(CH_3)=CH_2$ ist und R und n die in Anspruch 1 angegebene Bedeutung haben, mit der Bedingung, dass mindestens einer der Substituenten $R_{15}$ oder Z eine GLycidylgruppe oder eine Gruppe -OH, $-CH=CH_2$, $-C(CH_3)=CH_2$ oder -COOR enthält, einpolymerisiert wird.

9. Polymermikropartikel gemäss Anspruch 1, dadurch gekennzeichnet, dass mindestens eines der Anthrachinone der Formeln

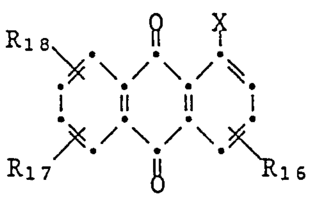  oder  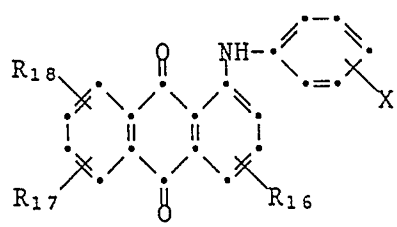

(XII) (XIII) ,

worin X, welches direkt oder über eine zweiwertige Gruppe $-(CH_2)_n-$, $-(CH_2)_n-O-$, $-(CH_2)_n-O-CH_2-$, $-(CH_2)_n-CHOH-$, $-(CH_2)_n-CHOH-CH_2O-$ oder $-NHCO-(CH_2)_p-$ an den aromatischen Ring gebunden ist, eine Gruppe der Formel

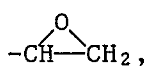 ,

$-CH=CH_2$, $-C(CH_3)=CH_2$, $-COCH=CH_2$, -COOR oder -CONHR bedeutet, worin R, n und p die in Anspruch 1 angegebene Bedeutung haben und $R_{16}$, $R_{17}$ und $R_{18}$ unabhängig voneinander Wasserstoff, Halogen, Hydroxy oder Amino bedeuten, einpolymerisiert wird.

10. Polymermikropartikel gemäss Anspruch 1, dadurch gekennzeichnet, dass mindestens eines der Perylentetracarbonsäurediimide der Formel

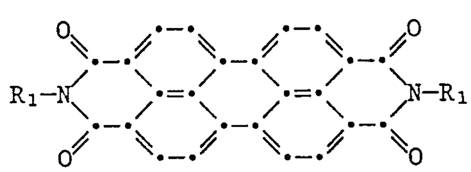  (II),

worin $R_1$ eine Gruppe $-(CH_2)_n-COOR$, $-(CH_2)_n-O$-Glycidyl, $-(CH_2)_n-OCO-CH=CH_2$ oder $-(CH_2)_n-OCO-C(CH_3)=CH_2$ ist, R Wasserstoff, ein Glycidylgruppe, eine Gruppe $-CH_2-CH=CH_2$, $-CH_2-C(CH_3)=CH_2$ oder $-CH_2-CHOH-CH_2OCO-C(CH_3)=CH_2$ ist und n eine Zahl von 6 bis 11 bedeuten, einpolymerisiert wird.

11. Polymermikropartikel gemäss Anspruch 1, dadurch gekennzeichnet, dass mindestens eines der Chinacridone der Formel

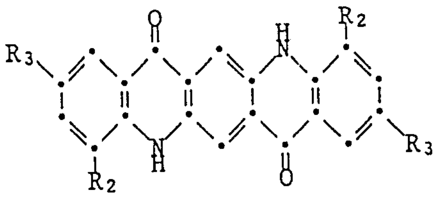 (III),

worin $R_2$ Wasserstoff, $R_3$ eine Gruppe -COOR und R Wasserstoff, eine Glycidylgruppe, eine Gruppe $-CH_2-CH=CH_2$, $-CH_2-C(CH_3)=CH_2$, $-(CH_2)_n-OCO-CH=CH_2$, $-(CH_2)_n-OCO-C(CH_3)=CH_2$ oder $-CH_2-CHOH-CH_2OCO-C(CH_3)=CH_2$ bedeuten, worin n die in Anspruch 1 angegebene Bedeutung hat, einpolymerisiert wird.

12. Polymermikropartikel gemäss Anspruch 1, dadurch gekennzeichnet, dass mindestens eines der Kupferphthalocyanine der Formel

$CuPc-(Y)_m$ (IV)

worin CuPc ein Kupferphthalocyaninrest, Y eine an einen aromatischen Ring des Kupferphthalocyanins gebundene Gruppe

$-SO_2NH-(CH_2)_n-OR''$ oder 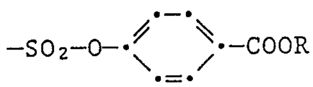

ist, worin R″ Wasserstoff, $-CO-CH=CH_2$ oder $-CO-C(CH_3)=CH_2$ ist, R Wasserstoff oder eine Gruppe $-CH_2-CH=CH_2$, $-CH_2-C(CH_3)=CH_2$ oder $-CH_2-CHOH-CH_2OCO-C(CH_3)=CH_2$ bedeutet, n die in Anspruch 1 angegebene Bedeutung hat und m eine Zahl von 1 bis 4 ist, einpolymerisiert wird.

13. Polymermikropartikel gemäss Anspruch 1, dadurch gekennzeichnet, dass mindestens eines der Dioxazine der Formel

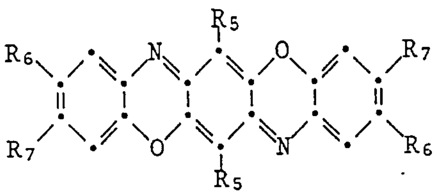 (VI),

worin $R_5$ Wasserstoff oder Chlor und $R_6$ Wasserstoff sind, $R_7$ eine Gruppe $-COO-(CH_2)_n-OCO-CH=CH_2$, $-COO-(CH_2)_n-OCO-C(CH_3)=CH_2$, $-CONH-(CH_2)_n-OCO-CH=CH_2$, $-CONH-(CH_2)_n-OCO-C(CH_3)=CH_2$ oder -NHCOR‴ bedeutet, R‴ eine Gruppe $-CH=CH_2$, $-C(CH_3)=CH_2$ oder $-(CH_2)_r-OH$, r eine Zahl von 2 bis 6 und n eine Zahl von 1 bis 12 sind einpolymerisiert wird.

14. Polymermikropartikel gemäss Anspruch 1, dadurch gekennzeichnet, dass mindestens eines der Isoindoline der Formeln

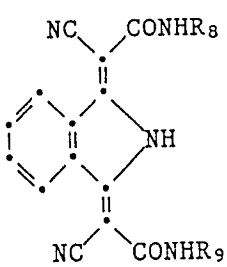 oder 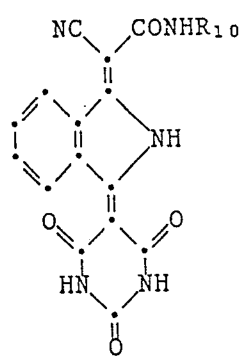

(VII) (VIII),

worin $R_8$ eine Gruppe

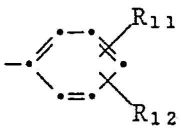 ist,

$R_9$ Wasserstoff oder eine Gruppe

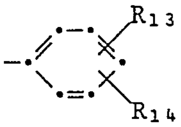 bedeutet,

$R_{10}$ die gleiche Bedeutung wie $R_8$ hat,

$R_{11}$ und $R_{13}$ unabhängig voneinander Wasserstoff oder Chlor sind und $R_{12}$ und $R_{14}$ unabhängig voneinander Wasserstoff, Chlor, eine Gruppe $-CH_2-CH=CH_2$, $-CH_2-C(CH_3)=CH_2$ oder -COOR bedeuten und R eine Glycidylgruppe oder eine Gruppe $-CH_2-CH=CH_2$, $-CH_2-C(CH_3)=CH_2$, $-(CH_2)_2-OCO-C(CH_3)=CH_2$ oder $-CH_2-CHOH-CH_2OCO-C(CH_3)=CH_2$ ist, wobei mindestens einer der Substituenten $R_{12}$ und $R_{14}$ eine Glycidylgruppe oder eine Gruppe $-CH=CH_2$, $-C(CH_3)=CH_2$ oder -COOR enthalten muss, einpolymerisiert wird.

15. Polymermikropartikel gemäss Anspruch 1, dadurch gekennzeichnet, dass mindestens eines der Diketopyrrolopyrrole der Formel

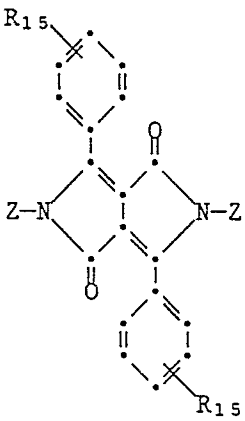 ,

(IX)

worin $R_{15}$ Wasserstoff, Halogen, Methyl, Methoxy, Cyano, Phenyl oder eine Gruppe -COOR bedeutet, Z Wasserstoff, eine Glycidylgruppe oder eine Gruppe $-CH_2-CH=CH_2$ oder $-CH_2-C(CH_3)=CH_2$ ist und R eine Glycidylgruppe oder eine Gruppe $-CH_2-CH=CH_2$, $-CH_2-C(CH_3)=CH_2$, $-(CH_2)_2-OCO-C(CH_3)=CH_2$ oder $-CH_2-CHOH-CH_2OCO-C(CH_3)=CH_2$ bedeutet, mit der Bedingung, dass mindestens einer der Substituenten $R_{15}$ oder Z eine Glycidylgruppe oder eine Gruppe $-CH=CH_2$, $-C(CH_3)=CH_2$ oder -COOR enthält, einpolymerisiert wird.

16. Polymermikropartikel gemäss Anspruch 1, dadurch gekennzeichnet, dass mindestens eines der Anthrachinone der Formeln XII oder XIII, worin X, welches über eine zweiwertige Gruppe $-NHCO-(CH_2)_p-$ an den aromatischen Ring gebunden ist, eine Gruppe der Formel $-CH=CH_2$, $-C(CH_3)=CH_2$ oder -COOR, worin R eine Glycidylgruppe oder eine Gruppe $-CH_2-CH=CH_2$, $-CH_2-C(CH_3)=CH_2$, $-(CH_2)_n-OCO-CH=CH_2$, $-(CH_2)_n-OCO-C(CH_3)=CH_2$ oder $-CH_2-CHOH-CH_2OCO-C(CH_3)=CH_2$ ist, bedeutet, n und p die in Anspruch 1 angegebene Bedeutung haben, $R_{17}$ und $R_{18}$ Wasserstoff und $R_{16}$ Wasserstoff, Halogen, Hydroxy oder Amino sind, einpolymerisiert wird.

17. Hochmolekulares organisches Material enthaltend als Farbmittel Polymermikropartikel gemäss Anspruch 1.

18. Beschichtungszusammensetzungen, in denen das filmbildende Material

a) 30 bis 95 Vol.-% einer dispersen Phase, die Polymermikropartikel gemäss Anspruch 1 enthält und

b) 70 bis 5 Vol-% einer flüssigen kontinuierlichen Phase mit einer Viskosität von 0,1 bis 30 Poise bei Raumtemperatur, die dazu fähig ist, in ein filmbildendes Polymer zu härten,

enthält, wobei das Gesamtvolumen von a) und b) 100% beträgt und die disperse Phase an der Lackhärtung teilnimmt.

19. Beschichtungszusammensetzungen gemäss Anspruch 16, in denen das filmbildende Material 30 bis 85 Vol-% der dispersen Phase, die mindestens 50 Vol-% Polymermikropartikel gemäss Anspruch 1 enthält, und 70-15 Vol-% der flüssigen kontinuierlichen Phase, die bei Raumtemperatur eine Viskosität von 0,1 bis 20 Poise aufweist.

20. Ingenieurwerkstoffe (Engineering Plastics) enthaltend als Farbmittel Polymermikropartikel gemäss Anspruch 1.